# EUROPEAN PATENT APPLICATION

(11) **EP 4 797 814 A1**
(43) Date of publication of application: **26.08.2026**
(21) Application number: 24914804.0
(22) Date of filing: 02.08.2024
(51) Int. Cl.: H04W 52/02

(54) **INFORMATION TRANSMISSION METHOD, ELECTRONIC DEVICE AND STORAGE MEDIUM**

(30) Priority: 05.01.2024 CN 202410028247
(71) Applicant: ZTE Corporation, Shenzhen, Guangdong 518057 (CN)
(72) Inventor: LI, Yan, Shenzhen, Guangdong 518057 (CN)
(74) Representative: Aipex B.V.
(86) International application number: PCT/CN2024/109578
(87) International publication number: WO 2025/145582

(57) **Abstract**

Provided are an information transmission method, an electronic device and a storage medium. The method is applied to a first node including at least a sub-access point and another sub-access point and includes: transmitting, according to a preset state of the sub-access point, a first message indicating power save information. The first message is transmitted according to different states of the sub-access point to implement transmission of the power save information of the sub-access point in a multi-link device, thereby reducing a probability of a frame exchange failure of a nonaccess point multi-link device and improving communication quality.

## Description

### TECHNICAL FIELD

The present application relates to the field of wireless communications and, in particular, to an information transmission method, an electronic device and a storage medium.

### BACKGROUND

Fiber to the Room (FTTR) is a technology for connecting, via optical fibers, wireless router access points (APs) located in different rooms or positions in scenarios such as homes or small and medium-sized enterprises, which can provide high-bandwidth and high-reliability connections for networking between multiple APs. A point-to-multipoint optical distribution network may be used to implement connections between a master control AP and slave APs. With the development of wireless communication technologies, the power saving requirement has gradually become a current important prerequisite for development. At present, research directions of AP-side power saving mechanisms are as follows: 1. a dynamic access point power save (AP PS) mechanism that guides, via a trigger frame, the dynamic adjustment of AP-side transmit and receive antennas; 2. a scheduled AP PS mechanism that makes an AP wake up within a service period and sleep outside the service period through periodic AP-side sleep counting; 3. an unscheduled AP PS mechanism that guides, via a trigger frame, the wakeup of an AP after the AP side enters a sleep. With development, multi-link operation (MLO) becomes an essential function at the AP side, and multi-link devices (MLDs) become an important product form at the AP side. However, after entering a power save mode, a sub-access point in an AP MLD cannot perform frame exchange or can only perform restricted frame exchange. For example, in the scheduled/unscheduled AP PS mechanism, the sub-access point in the AP MLD cannot perform frame exchange after entering a doze state; and in the dynamic AP PS mechanism, the sub-access point in the AP MLD can only exchange specific initialization control frames after entering a power saving state. Therefore, when the AP is about to enter the power save mode, a station (STA) on the current link and a STA on another link cannot obtain information related to the power save mode of the AP. After the AP enters the power save mode, the STA on another link cannot obtain the power saving state and the power save mode of the AP through a reduced neighbor report (RNR) element in a beacon or probe response sent by the AP. The STA on another link cannot obtain specific power save information of the AP through a multi-link probe response sent by the AP. If the current link is in the power saving state, when a non-AP MLD discovers another link of the AP MLD and is associated with the current link via another link of the AP MLD or is newly associated with the current link through a multi-link (ML) reconfiguration, the non-AP STA associated with the current link cannot normally communicate with the AP. Therefore, before a link of the AP MLD enters a power save mode and when the link is in the power save mode, the AP MLD needs to notify the power save information of the link through the other link of the AP MLD so that the non-AP MLD can obtain the power save information of the link in advance before being associated with the link, thereby avoiding a frame exchange failure or other communication failures of the non-AP MLD.

### SUMMARY

Embodiments of the present application provide an information transmission method, an electronic device and a storage medium to implement transmission of power save information of a sub-access point in an AP MLD, thereby reducing a probability of a frame exchange failure of a non-AP MLD and improving communication quality.

Embodiments of the present application provide an information transmission method. The method is applied to a first node including at least a sub-access point and another sub-access point and includes: transmitting, according to a preset state of the sub-access point, a first message indicating power save information.

Embodiments of the present application further provide an information transmission method. The method is applied to a second node including at least a first station and a second station and includes: receiving a first message indicating power save information and transmitted by a first node according to a preset state of a sub-access point.

Embodiments of the present application further provide a computer-readable storage medium. The computer-readable storage medium stores at least one program which, when executed by at least one processor, causes the at least one processor to perform the information transmission method of any embodiment of the present application.

It is to be understood that the content described in this part is neither intended to identify key or important features of embodiments of the present application nor intended to limit the scope of the present application. Other features of the present application are apparent from the description provided hereinafter.

### BRIEF DESCRIPTION OF DRAWINGS

To illustrate technical solutions in embodiments of the present application more clearly, the drawings used in the description of the embodiments are briefly described below. Apparently, the drawings described below illustrate merely part of the embodiments of the present application, and those of ordinary skill in the art may obtain other drawings based on these drawings on the premise that no creative work is done.
FIG. 1 is an architecture diagram of information transmission between multi-link devices according to an embodiment of the present application.
FIG. 2 is a flowchart of an information transmission method according to an embodiment of the present application.
FIG. 3 is an example diagram of an RNR element carrying power save information according to an embodiment of the present application.
FIG. 4 is an example diagram of a multi-link element carrying power save information based on general information according to an embodiment of the present application.
FIG. 5 is another example diagram of a multi-link element carrying power save information based on station information according to an embodiment of the present application.
FIG. 6 is an example diagram of power save information according to an embodiment of the present application.
FIG. 7 is another flowchart of an information transmission method according to an embodiment of the present application.
FIG. 8 is an example diagram of an information transmission method according to an embodiment of the present application.
FIG. 9 is a diagram illustrating the structure of an information transmission apparatus according to an embodiment of the present application.
FIG. 10 is another diagram illustrating the structure of an information transmission apparatus according to an embodiment of the present application.
FIG. 11 is a diagram illustrating the structure of an electronic device according to an embodiment of the present application.

### DETAILED DESCRIPTION

It is to be understood that the embodiments described herein are intended to explain the present application and not to limit the present application.

In the subsequent description, a word such as "module", "component", or "unit" for representing an element is used merely to facilitate the description of the present application and has no particular meaning in itself. Therefore, "module", "component", and "unit" may be used in combination.

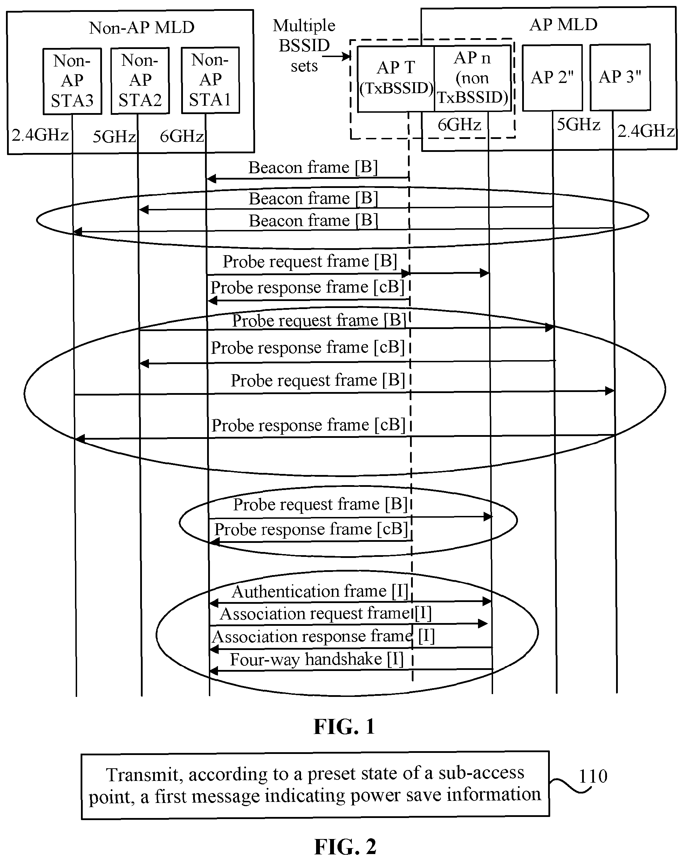

Referring to FIG. 1, an AP MLD includes multiple APs, and a non-AP MLD includes multiple STAs. The AP MLD can notify its operation and capability information on each link through a beacon frame and can also transmit information about another link through an RNR element. After acquiring the information, a non-AP STA in the non-AP MLD operating on the current link may request, on the current link through a multi-link probe request, the AP MLD to provide specific operation and capability information of another link. Moreover, a link to be requested may be specified by an AP MLD ID and a Link ID in the multi-link probe request.

FIG. 2 is a flowchart of an information transmission method according to an embodiment of the present application. The embodiment of the present application is applicable to the power saving of an AP MLD. This method may be performed by an information transmission apparatus which may be implemented by software and/or hardware and is generally integrated into the AP MLD. The AP MLD includes at least two APs. Referring to FIG. 2, the method according to the embodiment of the present application includes step 110.

In step 110, a first message indicating power save information is transmitted according to a preset state of a sub-access point.

The preset state may be a power saving state of a sub-access point in the AP MLD. The preset state may include that: the sub-access point is about to enter a power save mode or the power save mode is to be enabled; or the sub-access point is in the power save mode or the power save mode is enabled. The power save information may indicate the power saving state of the sub-access point. The first message may be a message indicating the power save information. The first message may be included in a reduced neighbor report (RNR) element, a multi-link element, or another newly added element.

In the embodiments of the present application, the AP MLD may transmit the first message according to different preset states of the sub-access point. The first message may indicate the power save information of the sub-access point.

Based on the preceding embodiments of the present application, the first message is included in at least one of: the RNR element, the multi-link element, or another newly added element.

In the embodiments of the present application, the first message indicating the power save information of the sub-access point in the AP MLD may be included in at least one of: the RNR element, the multi-link element, or another newly added element.

In some embodiments of the present application, that the first message indicating the power save information is transmitted according to the preset state of the sub-access point includes at least one of the following: the first message indicating the power save information of the sub-access point is transmitted according to the preset state via a link of the sub-access point; or the first message indicating the power save information of the sub-access point is transmitted according to the preset state via a link of another sub-access point.

In the embodiments of the present application, when the sub-access point is in different preset states, different links may be used to transmit the first message indicating the power save information. According to the preset state of the sub-access point, the first message indicating the power save information of the sub-access point may be transmitted via the link of the sub-access point. Alternatively, according to the preset state of the sub-access point, the first message indicating the power save information of the sub-access point may be transmitted via the link of the sub-access point.

For example, when the preset state includes that the sub-access point is in the power save mode or the power save mode is enabled, the first message indicating the power save information of the sub-access point is transmitted via the link of another sub-access point. When the preset state includes that the sub-access point is about to enter the power save mode or the power save mode is to be enabled, the first message indicating the power save information of the sub-access point is transmitted via the link of the sub-access point, or the first message indicating the power save information of the sub-access point is transmitted via the link of another sub-access point.

In some embodiments of the present application, that the first message indicating the power save information is transmitted according to the preset state of the sub-access point includes at least one of the following: the first message is transmitted after the sub-access point is in the power save mode or the power save mode is enabled; or the first message is transmitted before the sub-access point is about to enter the power save mode or the power save mode is to be enabled.

In the embodiments of the present application, the preset states are divided according to whether the sub-access point enters the power save mode and may include that: the sub-access point is in the power save mode or the power save mode is enabled; and the sub-access point is about to enter the power save mode or the power save mode is to be enabled. The AP MLD may transmit the first message after the sub-access point enters the power save mode or the power save mode is enabled or may transmit the first message before the sub-access point is about to enter the power save mode or the power save mode is to be enabled.

In some embodiments of the present application, the first message is included in the RNR element, and the power save information includes at least one of: the power save mode and a power management state.

In the embodiments of the present application, when the first message is transmitted in the RNR element, the power save information may include the power save mode and the power management state.

In some other embodiments of the present application, the first message is included in the multi-link element, and the power save information includes at least one of: a time until a change in the power save mode, the power save mode, power save wakeup time, a service period of the power save mode, a service interval of the power save mode, the power management state, or maximum transmission capability information in the power save mode.

In the embodiments of the present application, the power save information of the sub-access point may include the time until the change in the power save mode, the power save mode, the power save wakeup time, the service period of the power save mode, the service interval of the power save mode, the power management state, and the maximum transmission capability information in the power save mode. The time until the change in the power save mode is a maximum number of target beacon transmission times (TBTTs) until the sub-access point enables the power save mode or disables the current power save mode. The power save mode may include one of dynamic AP PS, scheduled AP PS, or unscheduled AP PS. The maximum transmission capability information in the power save mode includes at least one of: a maximum number of spatial streams (Nss), and a maximum modulation and coding scheme (MCS).

Based on the preceding embodiments of the present application, the power save mode includes at least one of: a dynamic power save mode, a scheduled power save mode, or an unscheduled power save mode.

In some embodiments of the present application, the method further includes: sending a beacon frame and a management frame via the link of another sub-access point.

In the embodiments of the present application, the AP MLD may send the beacon frame and the management frame via the link of another sub-access point so that a non-AP MLD can acquire the power save information of the sub-access point according to the beacon frame and the management frame.

Further, based on the preceding embodiments of the present application, in response to the preset state including that the sub-access point is about to enter the power save mode or the power save mode is to be enabled, the method further includes at least one of the following: a probe request frame from a first station of a second node is received, where the probe request frame is used to request the sub-access point to send a probe response frame, and the probe response frame carries the power save information of the sub-access point; a multi-link probe request frame from a second station of a second node is received, where the multi-link probe request frame is used to request another sub-access point to send a multi-link probe response frame, and the multi-link element in the multi-link probe response frame carries the power save information of the sub-access point; or a link association request of a second node corresponding to the sub-access point is received.

The second node may be a non-AP MLD managed by the AP MLD. The second node includes at least two stations. The first station may be a station in the second node, which is associated with the link of the sub-access point. The second station may be a station in the second node, which is associated with the link of another sub-access point in a first node.

In the embodiments of the present application, when the sub-access point is about to enter the power save mode or the power save mode is to be enabled, after the second node acquires the first message and determines the power save information of the sub-access point, the first station of the second node may send the probe request frame to the sub-access point so that the sub-access point may feed back the probe response frame carrying the power save information of the sub-access point, and the AP MLD may receive the probe request frame. The AP MLD may receive the multi-link probe request frame from the second station of the second node, where the multi-link probe request frame is used to request another sub-access point to feed back the multi-link probe response frame, and the multi-link probe response frame may carry the power save information of the sub-access point. The second node may determine whether to be associated with the sub-access point according to the first message. When determining to establish an association with the sub-access point, the second node may send the link association request, and the AP MLD may receive the link association request.

In some other embodiments of the present application, in response to the preset state including that the sub-access point is in the power save mode or the power save mode is enabled, the method further includes at least one of the following: the multi-link probe request frame from the second station of the second node is received, where the multi-link probe request frame is used to request another sub-access point to send the multi-link probe response frame, and the multi-link element in the multi-link probe response frame carries the power save information of the sub-access point; the link association request of the second node corresponding to the sub-access point is received.

In the embodiments of the present application, when the sub-access point is in the power save mode or the power save mode is enabled, the AP MLD may receive the multi-link probe request frame from the second station of the second node, where the multi-link probe request frame is used to request another sub-access point to feed back the multi-link probe response frame, and the multi-link probe response frame may carry the power save information of the sub-access point. The second node may determine whether to be associated with the sub-access point according to the first message. When determining to establish an association with the sub-access point, the second node may send the link association request, and the AP MLD may receive the link association request.

Based on the preceding embodiments of the present application, the first message is included in the RNR element in the following manner: adding an access point power save mode indication field and an access point power management indication field to multi-link device parameters in the RNR element to carry the first message.

In the embodiments of the present application, the access point power save mode indication field and the access point power management indication field may be added to the multi-link device parameters in the RNR element, and the power save mode and the power management state in the power save information indicated in the first message may be separately carried on the access point power save mode indication field and the access point power management indication field.

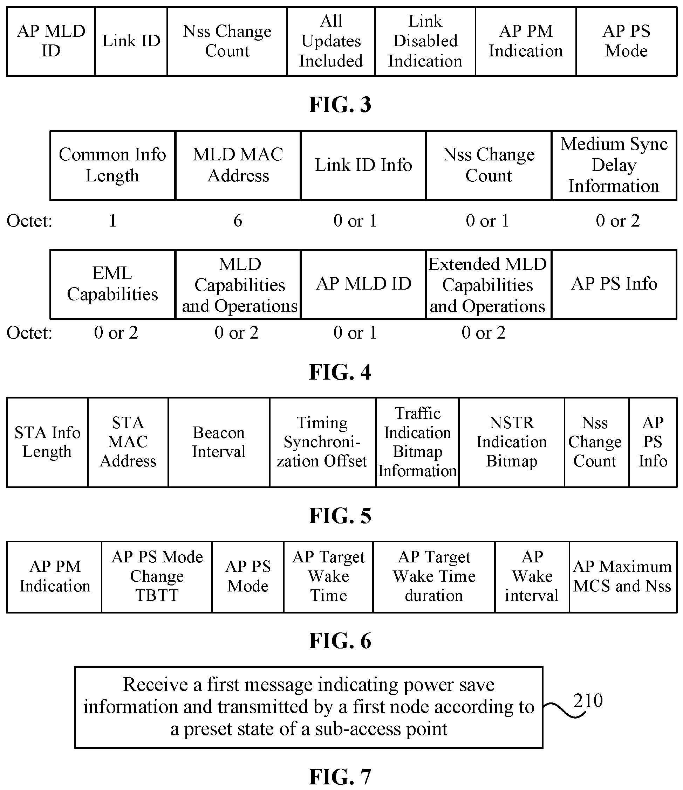

In an example embodiment, referring to FIG. 3, an AP power management (PM) indication field and an AP PS mode field may be added to MLD parameters in the RNR element. When the AP PM indication is 0, it indicates that the AP is currently in an active mode; and when the AP PM indication is 1, it indicates that the AP is currently in the power save mode. When the AP PS mode is 0, it indicates that the AP is currently in the dynamic power save mode; when the AP PS mode is 1, it indicates that the AP is currently in the scheduled power save mode; and when the AP PS mode is 2, it indicates that the AP is currently in the unscheduled power save mode.

Based on the preceding embodiments of the present application, the first message is included in the multi-link element in the following manner: adding an access point power save information field to a basic multi-link element in the multi-link element to carry the first message.

In the embodiments of the present application, the first message may be carried in the multi-link element, where the access point power save information field may be added to the basic multi-link element, and the first message indicating the power save information may be carried by the access point power save information field.

In another example embodiment, referring to FIG. 4, AP PS information may be added into a general information field in a format of the multi-link element. Referring to FIG. 5, AP PS information may be added into a station information field in the format of the multi-link element. The added AP PS information may include multiple fields. As shown in FIG. 6, the AP PS information may include an AP PM indication field, an AP PS mode change TBTT field, an AP PS mode field, an AP Target Wake Time (TWT) field, an AP TWT duration field, an AP wake interval field, and an AP maximum MCS and Nss field.

FIG. 7 is another flowchart of an information transmission method according to an embodiment of the present application. The embodiment of the present application is applicable to the power saving of an AP MLD. This method may be performed by an information transmission apparatus which may be implemented by software and/or hardware and is generally integrated into a non-AP MLD. The non-AP MLD includes at least two STAs. Referring to FIG. 7, the information transmission method according to the embodiment of the present application includes step 210.

In step 210, a first message transmitted by a first node according to a preset state of a sub-access point is received, where the first message is used to indicate power save information.

In the embodiments of the present application, a second node may receive the first message transmitted by the first node according to the preset state of the sub-access point. The first message may indicate the power save information of the sub-access point.

Based on the preceding embodiments of the present application, in response to the preset state including that the sub-access point is about to enter a power save mode or the power save mode is to be enabled, the method further includes at least one of the following: a management frame is received by a second station via a link of another sub-access point, and the power save information of the sub-access point is determined from the first message; a probe request frame is sent by a first station to request the sub-access point of the first node to send a probe response frame carrying the power save information; a multi-link probe request frame is sent by a second station to request another sub-access point of the first node to send a multi-link probe response frame carrying the power save information; or a link association request corresponding to the sub-access point is determined according to the power save information indicated in the first message.

In the embodiments of the present application, when the sub-access point of the first node is about to enter the power save mode or the power save mode is to be enabled, the management frame is received by the second station via the link of another sub-access point, and the power save information of the sub-access point is determined from the first message; the probe request frame is sent by the first station to enable the sub-access point of the first node to send the probe response frame carrying the power save information of the sub-access point; the multi-link probe request frame is sent by the second station to enable another sub-access point of the first node to send the multi-link probe response frame, where the multi-link probe response frame may carry the power save information of the sub-access point; or the first node may determine whether to continue to establish the link with the sub-access point according to the power save information of the sub-access point indicated in the first message to determine to generate the corresponding link association request.

Based on the preceding embodiments of the present application, in response to the preset state including that the sub-access point is in the power save mode or the power save mode is enabled, the method further includes at least one of the following: the management frame is received by the second station via the link of another sub-access point, and the power save information of the sub-access point is determined from the first message; the multi-link probe request frame is sent by the second station to request another sub-access point of the first node to send the multi-link probe response frame carrying the power save information of the sub-access point; the link association request corresponding to the sub-access point is determined according to the power save information indicated in the first message; or no probe request frame is sent by the first station, where the probe request frame is used to request the sub-access point of the first node to send the probe response frame carrying the power save information.

In the embodiments of the present application, when the preset state of the sub-access point of the first node includes that the sub-access point is about to enter the power save mode or the power save mode is to be enabled, the second node may perform at least one of the operations below.
1. The second station of the second node may receive the management frame via the link of another sub-access point of the first node and extract the power save information of the sub-access point of the first node from the first message.
2. The first station of the second node may send the multi-link probe request frame to another sub-access point of the first node to request another sub-access point to feed back the multi-link probe response frame carrying the power save information of the sub-access point.
3. The second node may determine whether to continue to establish a link association with the sub-access point according to the power save information of the sub-access point of the first node and generate the link association request corresponding to the sub-access point when determining to continue to establish the link association.
4. The first station may not perform the following: sending the probe request frame to the sub-access point of the first node to enable the sub-access point to feed back the probe response frame carrying the power save information of the sub-access point according to the probe request frame.

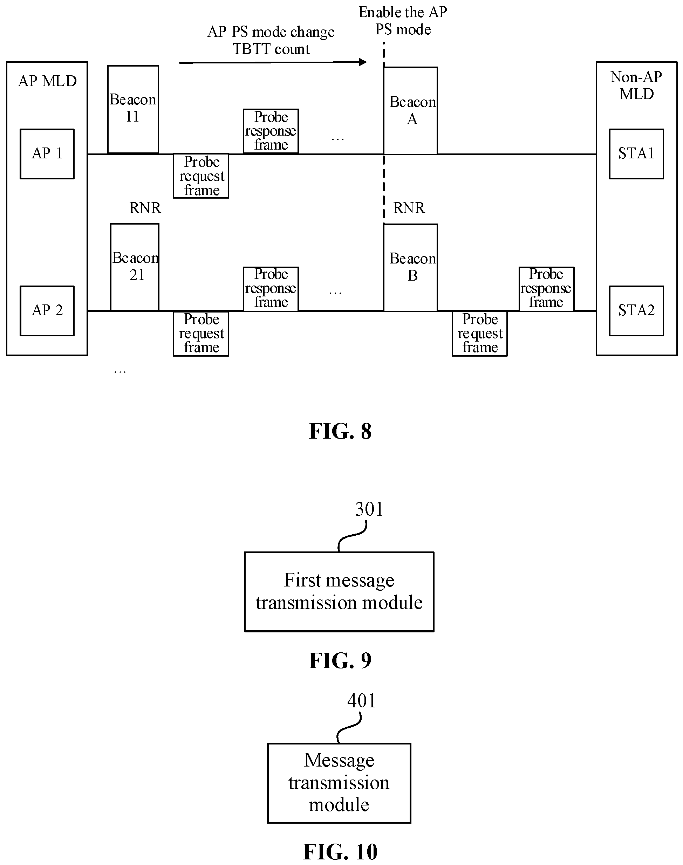

In an example embodiment, FIG. 8 is an example diagram of an information transmission method according to an embodiment of the present application. Referring to FIG. 8, AP1 and AP2 belong to an AP MLD, STA1 and STA2 belong to a non-AP MLD, and AP1 and AP2 are associated with STA1 and STA2, respectively. AP1 starts to notify, at beacon frame 11 (Beacon11), that an AP PS mode is about to change and enables the AP PS mode at beacon A. The AP PS mode includes multiple modes, and at least one of the multiple modes is enabled at beacon A.
1. A first link (AP1) of a first multi-link network device (AP MLD) is about to enter the PS mode. After receiving, via the first link (STA2), a beacon frame (beacon) and a management frame (probe response) sent by the first multi-link network device (AP MLD) via another link (AP2), a first MLD (non-AP MLD) may perform the operations below.
   (1) After receiving the management frame, STA2 finds brief power save information of AP1 in an RNR element.
   (2) STA1 may send a probe request frame (probe request) to request AP1 to send a probe response frame (probe response) carrying detailed power save information.
   (3) STA2 may send a multi-link probe request frame (multi-link probe request) to request AP2 to send a multi-link probe response frame (multi-link probe response), where the multi-link probe response frame includes a multi-link element (basic multi-link element) carrying detailed power save information of AP1.
   (4) The non-AP MLD may determine whether to be associated with this link subsequently according to the power save information of AP1.
2. The first link (AP1) of the first multi-link network device (AP MLD) is in the PS mode. After receiving, via the first link (STA2), the beacon frame (beacon) and the management frame (probe response) sent by the first multi-link network device (AP MLD) via another link (AP2), the first MLD (non-AP MLD) may perform the operations below.
   (1) After receiving the management frame, STA2 finds the brief power save information of AP1 in the RNR element.
   (2) STA2 may send the multi-link probe request frame (multi-link probe request) to request AP2 to send the multi-link probe response frame (multi-link probe response), where the multi-link probe response frame includes the multi-link element (basic multi-link element) carrying the detailed power save information of AP1.
   (3) The non-AP MLD may determine whether to be associated with this link subsequently according to the power save information of AP1.
   (4) AP1 may not send a beacon frame (beacon) or a probe response frame (probe response) to notify the power save information of AP1.
   (5) STA1 may not send the probe request frame (probe request) to request AP1 to send the probe response frame (probe response) carrying the detailed power save information.

Based on the preceding embodiments of the present application, the power save information of the AP may be included in at least one of: the RNR element, the multi-link element, or another newly added independent element.

In some other embodiments of the present application, the detailed power save information of the AP includes at least one of: a time until a change in the AP PS mode, the AP PS mode, AP PS wakeup time, a service period of the AP PS mode, a service interval of the AP PS mode, an AP PM state, or maximum transmission capability information in the AP PS mode. The time until the change in the AP PS mode is a maximum number of TBTTs until the AP enables the PS mode or disables the current PS mode. The AP PS mode may include one of: dynamic AP PS, scheduled AP PS, or unscheduled AP PS. The maximum transmission capability information in the AP PS mode includes at least one of: a maximum Nss and a maximum MCS.

In some embodiments of the present application, the brief power save information of the AP includes at least one of: the AP PS mode and the PM state.

In an example embodiment, before AP1 enters the PS mode, AP1 sends beacon11 carrying the power save information of AP1. The power save information of AP1 may be included in AP PS Info of common info in the basic multi-link element or included in another independent element in the beacon. The power save information includes at least one of: the time until the change in the AP PS mode, the AP PS mode, the AP PS wakeup time, the service period of the AP PS mode, the service interval of the AP PS mode, the AP PM state, or the maximum transmission capability information in the AP PS mode.

STA1 receives the power save information of AP1 in beacon11 as a basis for subsequently determining a multi-link link association. If the non-AP MLD considers that the power save operation of the current link does not affect the subsequent communication demand between the non-AP MLD and the AP MLD, the non-AP MLD may take the link corresponding to AP1 as a link for a subsequent association request; otherwise, the non-AP MLD may not take the link as a link for the association request.

In another example embodiment, before AP1 enters the PS mode, AP2 sends beacon21 carrying the power save information of AP1. The power save information of AP1 is included in the RNR element or included in another independent element in the beacon. The power save information includes at least one of: the PS mode and the PM state. STA2 receives the power save information of AP1 in beacon21 and obtains that AP1 is about to enter the PS mode. STA1 may send the probe request to request the detailed power save information of AP1. Alternatively, STA2 may send the multi-link probe request to request the detailed power save information of AP1. After receiving the probe request from STA1, AP1 returns a probe response including the detailed power save information of AP1 in the AP PS Info of the common info in the basic multi-link element or including the detailed power save information of AP1 in another independent element of the probe response. Alternatively, after receiving the multi-link probe request from STA2, AP2 returns a multi-link probe response including the detailed power save information of AP1 in AP PS Info of a per-STA profile in the basic multi-link element or including the detailed power save information of AP1 in another independent element of the multi-link probe response. The power save information includes at least one of: the time until the change in the AP PS mode, the AP PS mode, the AP PS wakeup time, the service period of the AP PS mode, the service interval of the AP PS mode, the AP PM state, or the maximum transmission capability information in the AP PS mode. The non-AP MLD takes the received power save information of the AP as a basis for subsequently determining the multi-link link association. If the non-AP MLD considers that the power save operation of the current link does not affect the subsequent communication demand between the non-AP MLD and the AP MLD, the non-AP MLD may take the link as a link for the subsequent association request; otherwise, the non-AP MLD may not take the link as a link for the association request.

In some other embodiments of the present application, after AP1 enters the PS mode, AP1 does not send the beacon or probe response to notify the power save information of AP1. The power save information includes the time until the change in the AP PS mode, the AP PS mode, the AP PS wakeup time, the service period of the AP PS mode, the service interval of the AP PS mode, the AP PM state, and the maximum transmission capability information in the AP PS mode. STA1 may not send the probe request or multi-link probe request to request the above power save information of AP1.

In some other embodiments of the present application, after AP1 enters the PS mode, AP2 sends beacon B carrying the power save information of AP1. The power save information of AP1 is included in the RNR element or included in another independent element in the beacon. The power save information includes at least one of: the PS mode and the PM state. STA2 receives the power save information of AP1 in beacon B and obtains that AP1 has entered the PS mode. STA1 in the non-AP MLD may not send the probe request or may send a restricted request for the detailed power save information of AP1. Alternatively, STA2 sends the multi-link probe request to request the detailed power save information of AP1. After receiving the restricted request sent by STA1, AP1 returns a restricted response including the detailed power save information of AP1 in the AP PS Info of the common info in the basic multi-link element or including the detailed power save information of AP1 in another independent element of the restricted response. Alternatively, after receiving the multi-link probe request from STA2, AP2 returns a multi-link probe response including the detailed power save information of AP1 in the AP PS Info of the per-STA profile in the basic multi-link element or returns a beacon including the detailed power save information of AP1 in another independent element of the beacon. The power save information includes at least one of: the time until the change in the AP PS mode, the AP PS mode, the AP PS wakeup time, the service period of the AP PS mode, the service interval of the AP PS mode, the AP PM state, or the maximum transmission capability information in the AP PS mode. The non-AP MLD takes the received power save information of the AP as a basis for subsequently determining the multi-link link association. If the non-AP MLD considers that the power save operation of the current link does not affect the subsequent communication demand between the non-AP MLD and the AP MLD, the non-AP MLD may take the link as a link for the subsequent association request; otherwise, the non-AP MLD may not take the link as a link for the association request.

A transmission of the restricted request or response satisfies at least one of the following requirements: a restricted transmission within a particular time period; a restricted transmission in a particular frame format; a restricted transmission using a particular MCS or Nss; or a restricted transmission using a particular frequency band or bandwidth.

FIG. 9 is a diagram illustrating the structure of an information transmission apparatus according to an embodiment of the present application. This apparatus may perform the information transmission method according to any embodiment of the present application and has function modules and beneficial effects corresponding to the performed method. This apparatus may be implemented by software and/or hardware and is generally applied to an AP MLD. As shown in FIG. 9, the apparatus according to the embodiment of the present application includes a first message transmission module 301.

The first message transmission module 301 is configured to transmit, according to a preset state of a sub-access point, a first message indicating power save information.

Based on the preceding embodiments of the present application, the first message transmission module is configured to perform at least one of the following operations: transmitting the first message indicating the power save information of the sub-access point according to the preset state via a link of the sub-access point; or transmitting the first message indicating the power save information of the sub-access point according to the preset state via a link of another sub-access point.

Based on the preceding embodiments of the present application, the first message in the first message transmission module is included in at least one of: an RNR element, a multi-link element, or another newly added element.

Based on the preceding embodiments of the present application, the first message transmission module is configured to perform at least one of the following operations: transmitting the first message after the sub-access point enters a power save mode or the power save mode is enabled; or transmitting the first message before the sub-access point is about to enter a power save mode or the power save mode is to be enabled.

Based on the preceding embodiments of the present application, the first message in the apparatus is included in the RNR element, and the power save information includes at least one of: the power save mode and a power management state.

Based on the preceding embodiments of the present application, the first message in the apparatus is included in the multi-link element, and the power save information includes at least one of: a time until a change in the power save mode, the power save mode, power save wakeup time, a service period of the power save mode, a service interval of the power save mode, the power management state, or maximum transmission capability information in the power save mode.

Based on the preceding embodiments of the present application, the power save mode includes at least one of: a dynamic power save mode, a scheduled power save mode, or an unscheduled power save mode.

Based on the preceding embodiments of the present application, the apparatus further includes a first module, and the first module is configured to, in response to the preset state including that the sub-access point is about to enter the power save mode or the power save mode is to be enabled, perform at least one of the following operations: receiving a probe request frame from a first station of a second node, where the probe request frame is used to request the sub-access point to send a probe response frame, and the probe response frame carries the power save information of the sub-access point; receiving a multi-link probe request frame from a second station of a second node, where the multi-link probe request frame is used to request another sub-access point to send a multi-link probe response frame, and the multi-link element in the multi-link probe response frame carries the power save information of the sub-access point; or receiving a link association request of a second node corresponding to the sub-access point.

Based on the preceding embodiments of the present application, the apparatus further includes a second module, and the second module is configured to, in response to the preset state including that the sub-access point is in the power save mode or the power save mode is enabled, perform at least one of the following operations: receiving the multi-link probe request frame from the second station of the second node, where the multi-link probe request frame is used to request another sub-access point to send the multi-link probe response frame, and the multi-link probe response frame carries the power save information of the sub-access point; or receiving the link association request corresponding to the sub-access point and determined by the second node.

Based on the preceding embodiments of the present application, the first message in the apparatus is included in the RNR element in the following manner: adding an access point power save mode indication field and an access point power management indication field to multi-link device parameters in the RNR element to carry the first message.

Based on the preceding embodiments of the present application, the first message in the apparatus is included in the multi-link element in the following manner: adding an access point power save information field to a basic multi-link element in the multi-link element to carry the first message.

FIG. 10 is another diagram illustrating the structure of an information transmission apparatus according to an embodiment of the present application. This apparatus may perform the information transmission method according to any embodiment of the present application and has function modules and beneficial effects corresponding to the performed method. This apparatus may be implemented by software and/or hardware and is generally applied to a non-AP MLD. As shown in FIG. 10, the apparatus according to the embodiment of the present application includes a message transmission module 401.

The message transmission module 401 is configured to receive a first message transmitted by a first node according to a preset state of a sub-access point, where the first message is used to indicate power save information.

Based on the preceding embodiments of the present application, the message transmission module 401 is configured to perform at least one of the following operations: receiving the first message transmitted by the first node according to the preset state via a link of the sub-access point, where the first message is used to indicate the power save information; or receiving the first message transmitted by the first node according to the preset state via a link of another sub-access point, where the first message is used to indicate the power save information.

Based on the preceding embodiments of the present application, the apparatus further includes a third module, and the third module is configured to, in response to the preset state including that the sub-access point is about to enter a power save mode or the power save mode is to be enabled, perform at least one of the following operations: receiving a management frame by a second station via a link of another sub-access point, and the power save information of the sub-access point is determined from the first message; sending a probe request frame by a first station to request the sub-access point of the first node to send a probe response frame carrying the power save information; sending a multi-link probe request frame by a second station to request another sub-access point of the first node to send a multi-link probe response frame carrying the power save information; or determining a link association request corresponding to the sub-access point according to the power save information indicated in the first message.

Based on the preceding embodiments of the present application, the apparatus further includes a fourth module, and the fourth module is configured to, in response to the preset state including that the sub-access point is in the power save mode or the power save mode is enabled, perform at least one of the following operations: receiving the management frame by the second station via the link of another sub-access point, and the power save information of the sub-access point is determined from the first message; sending the multi-link probe request frame by the second station to request another sub-access point of the first node to send the multi-link probe response frame carrying the power save information of the sub-access point; determining the link association request corresponding to the sub-access point according to the power save information indicated in the first message; or not sending a probe request frame by the first station, where the probe request frame is used to request the sub-access point of the first node to send the probe response frame carrying the power save information.

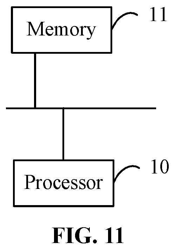

FIG. 11 is a diagram illustrating the structure of an electronic device according to an embodiment of the present application. The electronic device includes a processor 10 and a memory 11. One or more processors 10 may be provided in the electronic device, with one processor 10 shown as an example in FIG. 11. The processor 10 and the memory 11 in the electronic device may be connected via a bus or in other manners. In FIG. 11, the connection via a bus is shown as an example.

As a computer-readable storage medium, the memory 11 may be configured to store software programs, computer-executable programs, and modules, such as the module (the first message transmission module 301 or the message transmission module 401) corresponding to the apparatus in an embodiment of the present application. The processor 10 executes software programs, instructions, and modules stored in the memory 11 to perform function applications and data processing of the electronic device, that is, to perform the preceding information transmission method.

The memory 11 may mainly include a program storage region and a data storage region, where the program storage region may store an operating system and an application program required by at least one function, and the data storage region may store data created depending on use of the electronic device. Additionally, the memory 11 may include a high-speed random-access memory and may also include a nonvolatile memory such as at least one disk memory, a flash memory, or another nonvolatile solid-state memory. In some examples, the memory 11 may further include memories remotely disposed relative to the processor 10. These remote memories may be connected to the electronic device via a network. Examples of the network include, but are not limited to, the Internet, an intranet, a local area network, a mobile communication network, and a combination thereof.

An embodiment of the present application provides a storage medium including computer-executable instructions. The computer-executable instructions, when executed by a computer processor, cause the processor to perform an information transmission method. The method includes: transmitting, according to a preset state of a sub-access point, a first message indicating power save information.

Alternatively, the computer-executable instructions, when executed by the computer processor, cause the processor to perform an information transmission method. The method includes: receiving a first message indicating power save information and transmitted by a first node according to a preset state of a sub-access point.

From the preceding description of embodiments, it is apparent to those skilled in the art that the present application may be implemented by software and necessary general-purpose hardware or may be implemented by hardware, but the former is preferred in many cases. Based on this understanding, the technical solutions of the present application substantially, or the part contributing to the related art, may be embodied in the form of a software product. The computer software product may be stored in a computer-readable storage medium such as a floppy disk, a read-only memory (ROM), a random-access memory (RAM), a flash memory, a hard disk, or an optical disk of a computer and includes several instructions to enable a computer device (which may be a personal computer, a server, or a network device) to perform the information transmission method according to any embodiment of the present application.

It is to be noted that units and modules included in the embodiments of the preceding apparatus are divided according to functional logic, and the division is not limited to this as long as the corresponding functions can be implemented. Additionally, the names of function units are intended for distinguishing between each other and are not to limit the scope of the present application.

It is to be understood by those having ordinary skill in the art that some or all steps of the preceding method and function modules/units in the preceding apparatus or device may be implemented as software, firmware, hardware, and suitable combinations thereof.

In the hardware implementation, the division of the preceding function modules/units may not correspond to the division of physical components. For example, one physical component may have multiple functions, or one function or step may be performed jointly by multiple physical components. Some or all physical components may be implemented as software executed by a processor such as a central processing unit, a digital signal processor, or a microprocessor, may be implemented as hardware, or may be implemented as integrated circuits such as application-specific integrated circuits. The corresponding software may be distributed on a computer-readable medium. The computer-readable medium may include a computer storage medium (or non-transitory medium) and a communication medium (or transitory medium). As is known to those having ordinary skill in the art, the term computer storage medium includes volatile and nonvolatile media as well as removable and non-removable media implemented in any method or technology for storing information (such as computer-readable instructions, data structures, program modules, or other data). The computer storage medium includes, but is not limited to, a RAM, a ROM, an electrically erasable programmable read-only memory (EEPROM), a flash memory or another memory technology, a compact disc read-only memory (CD-ROM), a digital video disc (DVD) or another optical disc memory, a magnetic cassette, a magnetic tape, a magnetic disk memory or another magnetic storage apparatus, or any other medium that is used for storing desired information and that can be accessed by a computer. Additionally, as is known to those having ordinary skill in the art, the communication medium generally includes computer-readable instructions, data structures, program modules, or other data in carriers or in modulated data signals transported in other transport mechanisms and may include any information delivery medium.

Optional embodiments of the present application are described above with reference to the drawings and are not intended to limit the scope of the present application. Any modifications, equivalent substitutions, and improvements made by those skilled in the art without departing from the scope and substantive content of the present application fall within the scope of the present application.

## Claims

1. An information transmission method, applied to a first node comprising at least a sub-access point and another sub-access point, and comprising:
transmitting, according to a preset state of the sub-access point, a first message indicating power save information.

2. The information transmission method of claim 1, wherein transmitting, according to the preset state of the sub-access point, the first message indicating the power save information comprises at least one of:
transmitting, according to the preset state via a link of the sub-access point, the first message indicating the power save information of the sub-access point; or
transmitting, according to the preset state via a link of another sub-access point, the first message indicating the power save information of the sub-access point.

3. The information transmission method of claim 1, wherein the first message is comprised in at least one of:
a reduced neighbor report element, a multi-link element, or another newly added element.

4. The information transmission method of claim 1, wherein the preset state comprises at least one of the following:
the sub-access point is in a power save mode or the power save mode is enabled; or
the sub-access point is about to enter a power save mode or the power save mode is to be enabled.

5. The information transmission method of claim 1, wherein the first message is comprised in a reduced neighbor report element; and
the power save information comprises at least one of: a power save mode and a power management state.

6. The information transmission method of claim 1, wherein the first message is comprised in a multi-link element; and
the power save information comprises at least one of: a time until a change in a power save mode, a power save mode, power save wakeup time, a service period of a power save mode, a service interval of a power save mode, a power management state, or maximum transmission capability information in a power save mode.

7. The information transmission method of claim 6, wherein the power save mode comprises at least one of:
a dynamic power save mode, a scheduled power save mode, or an unscheduled power save mode.

8. The information transmission method of claim 1, in response to the preset state comprising that the sub-access point is about to enter a power save mode or the power save mode is to be enabled, further comprising at least one of:
receiving a probe request frame from a first station of a second node, wherein the probe request frame is used to request the sub-access point to send a probe response frame, and the probe response frame carries the power save information of the sub-access point;
receiving a multi-link probe request frame from a second station of a second node, wherein the multi-link probe request frame is used to request another sub-access point to send a multi-link probe response frame, and a multi-link element in the multi-link probe response frame carries the power save information of the sub-access point; or
receiving a link association request of a second node corresponding to the sub-access point.

9. The information transmission method of claim 1, in response to the preset state comprising that the sub-access point is in a power save mode or the power save mode is enabled, further comprising at least one of:
receiving a multi-link probe request frame from a second station of a second node, wherein the multi-link probe request frame is used to request another sub-access point to send a multi-link probe response frame, and the multi-link probe response frame carries the power save information of the sub-access point; or
receiving a link association request corresponding to the sub-access point and determined by a second node.

10. The information transmission method of claim 3, wherein the first message is comprised in the reduced neighbor report element in the following manner:
adding an access point power save mode indication field and an access point power management indication field to multi-link device parameters in the reduced neighbor report element to carry the first message.

11. The information transmission method of claim 3, wherein the first message is comprised in the multi-link element in the following manner:
adding an access point power save information field to a basic multi-link element in the multi-link element to carry the first message.

12. An information transmission method, applied to a second node comprising at least a first station and a second station, and comprising:
receiving a first message indicating power save information and transmitted by a first node according to a preset state of a sub-access point.

13. The information transmission method of claim 12, wherein receiving the first message indicating the power save information and transmitted by the first node according to the preset state of the sub-access point comprises:
receiving the first message indicating the power save information and transmitted by the first node according to the preset state via a link of the sub-access point; or
receiving the first message indicating the power save information and transmitted by the first node according to the preset state via a link of another sub-access point.

14. The information transmission method of claim 13, wherein the first message is comprised in at least one of:
a reduced neighbor report element, a multi-link element, or another newly added element.

15. The information transmission method of claim 12, in response to the preset state comprising that the sub-access point is about to enter a power save mode or the power save mode is to be enabled, further comprising at least one of:
receiving a management frame by the second station via a link of another sub-access point, and determining the power save information of the sub-access point from the first message;
sending a probe request frame by the first station to request the sub-access point of the first node to send a probe response frame carrying the power save information;
sending a multi-link probe request frame by the second station to request another sub-access point of the first node to send a multi-link probe response frame carrying the power save information; or
determining a link association request corresponding to the sub-access point according to the power save information indicated in the first message.

16. The information transmission method of claim 12, in response to the preset state comprising that the sub-access point is in a power save mode or the power save mode is enabled, further comprising at least one of:
receiving a management frame by the second station via a link of another sub-access point, and determining the power save information of the sub-access point from the first message;
sending a multi-link probe request frame by the second station to request another sub-access point of the first node to send a multi-link probe response frame carrying the power save information of the sub-access point;
determining a link association request corresponding to the sub-access point according to the power save information indicated in the first message; or
not sending a probe request frame according to the first station, wherein the probe request frame is used to request the sub-access point of the first node to send a probe response frame carrying the power save information.

17. An electronic device, comprising:
at least one processor; and
a memory configured to store at least one program;
wherein the at least one program is executed by the at least one processor to cause the at least one processor to perform the information transmission method of any one of claims 1 to 11 or any one of claims 12 to 16.

18. A computer-readable storage medium storing at least one program executed by at least one processor to cause the at least one processor to perform the information transmission method of any one of claims 1 to 11 or any one of claims 12 to 16.
